# EUROPÄISCHE PATENTSCHRIFT

(11) **EP 0 535 322 B1**
(45) Veröffentlichungstag und Bekanntmachung des Hinweises auf die Patenterteilung: **06.09.1995**
(21) Anmeldenummer: 92112842.7
(22) Anmeldetag: 28.07.1992
(51) Int. Cl.: H02J 7/35, H02N 6/00, G05F 1/67

(54) **Elektrische Energieversorgungsvorrichtung für Kleinstspannungs-Gleichstromverbraucher**
Electrical power supply device for a minimal tension - DC consumer
Dispositif pour l'alimentation en énergie électrique pour un dissipateur à tension minimale de courant continu

(30) Priorität: 28.09.1991 DE 4132376
(43) Veröffentlichungstag der Anmeldung: 07.04.1993
(73) Patentinhaber: SIEGENIA-FRANK KG, 57074 Siegen (DE)
(72) Erfinder: Kucharczyk, Eckhard, W-5901 Wilnsdorf 2 (DE)

(56) Entgegenhaltungen:
- EP-A- 0 206 253
- EP-A- 0 319 941
- DE-A- 4 014 534
- SOVIET PATENT ABSTRACTS, S-X Electrical, Woche 8946, 03. Januar 1990 DERWENT PUBLICATIONS LTD., X15 X16

## Beschreibung

Die Erfindung betrifft eine elektrische Energieversorungsvorrichtung für Kleinstspannungs-Gleichstromverbraucher, z.B. Gleichstrommotoren von Luftfördereinrichtungen oder auch Fenster- und Türbeschlag-Stellantrieben, bestehend aus fotovoltaischen Elementen (Solarpaneelen) und einem hiervon beaufschlagten Akkumulator, der dem Verbraucher als Puffereinrichtung vorgeschaltet ist.

Es ist bereits bekannt, durch einen Solargenerator entweder unmittelbar den Elektromotor eines Lüfters zu speisen oder aber - bei abgeschaltetem Lüftermotor - einen vorhanden Akkumulator aufzuladen (DE-PS 31 25 488 und DE-OS 35 40 353).

Bekannt ist aber auch bereits eine Lüfteranordnung, welche wahlweise mit Gleichstrom aus einem Akkumulator oder mit Solarstrom aus einem Solarpaneel betrieben werden kann (DE-PS 38 02 336).

Schließlich gehört es durch DE-GM 89 06 427 aber auch schon zum Stand der Technik, Lüfteranordnungen mit Kleinstspannungs-Gleichstrommotoren von Solarzellen aus über zwischengeschaltete Akkumulatoren mit Antriebsenergie zu speisen. Hierbei wird die auf fotovoltaischem Wege erzeugte elektrische Energie ständig von den Akkumulatoren aufgenommen, aber nur bedarfsweise an die Kleinstspannungs-Gleichstrommotoren der Lüfteranordnung weitergegeben.

Auch für Fenster- und Türbeschlag-Stellantriebe ist durch DE-OS 38 24 531 schon die Benutzung von Kleinstspannungs-Gleichstrommotoren vorgeschlagen worden, die von Akkumulatoren gespeist werden können, welche ständig mit einem fotovoltaischen Element (Sonnenzelle) in Ladeverbindung stehen. Alternativ können in diesem Falle die Kleinstspannungs-Elektromotoren aber auch unter Zwischenschaltung eines Transformators unmittelbar aus dem Ortsnetz speisen.

Nach der Erfindung geht es um die Schaffung einer elektrischen Energieversorgungsvorrichtung für Kleinstspannungs-Gleichstromverbraucher, die deren vorrangigen Betrieb mit fotovoltaischer Engergie ermöglicht, also umweltschonend bzw. umweltverträglich arbeitet, die aber nachrangig - und gewissermaßen im Notlauf - eine zeitweilige Speisung des Akkumulators und der Gleichstromverbraucher vom Ortsnetz her sicherstellt, nur um einer völligen Entladung des Akkumulators und den daraus resultierenden Nachteilen vorzubeugen.

Erreicht wird das gesteckte Ziel erfindungsgemäß grundsätzlich dadurch, daß dem Akkumulator neben den fotovoltaischen Elementen ein netzgespeister Transformator zugeordnet ist,
daß der Akkumulator mit den fotovoltaischen Elementen und/oder dem Sekundärteil des Transformators über einen Laderegler verbindbar ist,
und daß dabei der Laderegler in Abhängigkeit vom Ladezustand des Akkumulators zwischen drei verschiedenen Schaltzuständen umstellbar ist,
von denen der eine die fotovoltaischen Elemente und den Transformator parallel zueinander auf den Akkumulator schaltet, der zweite den Transformator vom Akkumulator trennt und der dritte auch eine Trennung der fotovoltaischen Elemente vom Akkumulator herbeiführt.

Wenn die Leistung der fotovoltaischen Elemente (Solarpaneele) und die Kapazität des Akkumulators richtig aufeinander und auf die angeschlossenen Gleichstromverbraucher abgestimmt sind, wird die elektrische Energie für den Betrieb der Gleichstromverbraucher praktisch vollständig von den fotovoltaischen Elementen erzeugt und damit ein umweltverträglicher bzw. umweltschonender Betrieb der Gleichstromverbraucher ermöglicht. Lediglich im Notfall, wenn also zeitweilig die auf fotovoltaischem Wege erzeugte Energie zu einer ordnungsgemäßen Speisung der Gleichstromverbraucher nicht oder nicht mehr ausreicht, tritt der netzgespeiste Transformator in Aktion und lädt den Akkumulator teilweise - aber nicht bis zum Erreichen seiner Ladeschlußspannung - auf.

Wichtig ist dabei die erfindungsgemäße Ausstattung mit Schaltgliedern im Laderegler, über die der Transformator einerseits ausschließlich bei Unterschreitung eines vorgegebenen Minimal-Ladezustandes des Akkumulators mit diesem verbindbar, andererseits aber bis zum Erreichen eines Teil-Ladezustandes mit diesem in Verbindung haltbar ist.

Nach einer vorteilhaften Ausgestaltung der Erfindung ist ferner vorgesehen, daß als Laderegler ein - üblicherweise - zur Ansteuerung einer Leuchtdioden-Kette <LED-Kette> ausgelegter - also eine Mehrzahl von Ausgängen aufweisender - integrierter Schaltkreis <IC> eingesetzt ist, bei dem die einzelnen Ausgänge einen bestimmten Spannungsabstand, z.B. von 0,5 Volt, voneinander haben, daß der integrierte Schaltkreis <IC> über zwei mit dem Akkumulator verbundene Eingänge in Abhängigkeit von unterschiedlichen Ladezuständen des Akkumulators auf seine einzelnen Ausgänge umschaltbar ist, und daß dabei ein erster Ausgang des integrierten Schaltkreises <IC> bei minimalem Ladezustand und ein letzter Ausgang desselben bei maximalem Ladezustand des Akkumulators aktiviert ist, wobei der erste Ausgang den Transformator und die fotovoltaischen Elemente gleichzeitig und parallel zueinander mit dem Akkumulator verbindet, während ein Zwischen-Ausgang den Transformator vom Akkumulator bei Erreichen eines vorgebbaren Teil-Ladezustandes trennt. Nach einer weiteren vorteilhaften Ausgestaltung der Erfindung ist dabei vorgesehen, daß der letzte Ausgang des integrierten Schaltkreises <IC> die fotovoltaischen Elemente vom Akkumulator bei maximalem Ladezustand trennt, während ein anderer Zwischen-Ausgang des integrierten Schaltkreises <IC> die fotovoltaischen Elemente schon wieder mit dem Akkumulator verbindet, nachdem dieser nur um einen Bruchteil seiner maximalen Kapazität, z.B. um etwa 10%, entladen worden ist.

In vorteilhafter Weise kann erfindungsgemäß auch jeder Ausgang des integrierten Schaltkreises <IC> noch mit einer als Anzeigeelement dienenden Leuchtdiode in Verbindung stehen, so daß hierdurch - zumindest tendenziell - der jeweilige Ladezustand des Akkumulators erkennbar gemacht wird.

Es erweist sich auch als vorteilhaft, wenn in Ausgestaltung der Erfindung die An- und Abschalter für den Transformator und die fotovoltaischen Elemente jeweils von einem bistabilen Relais gebildet sind und daß dabei jede Wicklung desselben eingangssseitig unter Zwischenschaltung eines Transistors an einen Ausgang des integrierten Schaltkreises <IC> gelegt ist. Dabei sollte jeder Transistor mit seiner Basis an einem Ausgang des integrierten Schaltkreises <EC> liegen, während er über seinen Kollektor mit der zugeordneten Wicklung des bistabilen Relais in Verbindung steht.

Sowohl dem An- und Abschalter für den Transformator als auch dem An- und Abschalter für die fotovoltaischen Elemente kann in erfindungsgemäßer Ausgestaltung der Energieversorgungsvorrichtung eine Leuchtdiode als Anzeigeelement zugeordnet werden.

Schließlich ist es im Rahmen der Erfindung auch noch von Vorteil, wenn zwischen den Plus-Ausgang und den Minus-Ausgang des Akkumulators mehrere in Reihe bzw. hintereinandergeschaltete integrierte Schaltkreise <IC> gelegt sind, die eine Ausbildung als Spannungsregler aufweisen. Die Gleichstromverbraucher, also beispielsweise Gleichstrommotoren von Luftfördereinrichtungen oder auch von Fenster- und Türbeschlag-Stellantrieben, können hierdurch - über ein Potentiometer - mit einer variablen Betriebsspannung versorgt und folglich hinsichtlich ihrer (Antriebs-) Leistung beeinflußt werden.

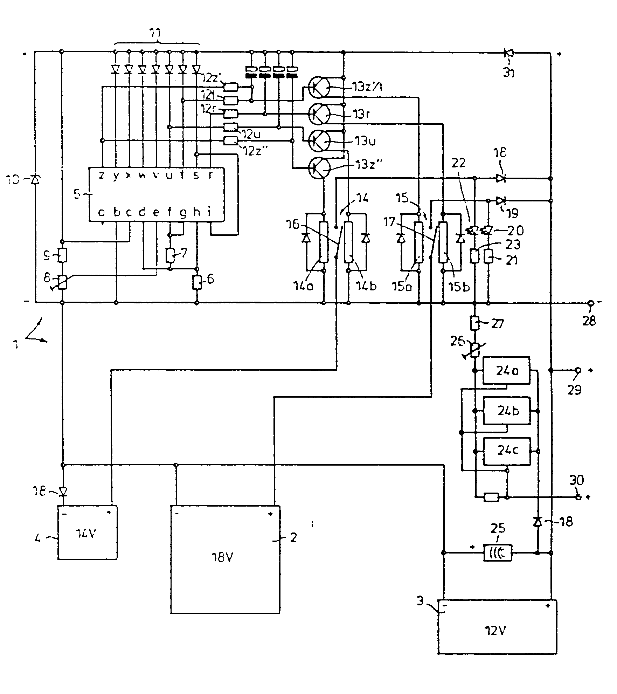

Anhand der einzigen Figur der Zeichnung wird ein Ausführungsbeispiel der erfindungsgemäßen, elektrischen Energieversorgungsvorrichtung nachfolgend ausführlich beschrieben.

Aus der Zeichnung geht hervor, daß eine elektrische Energieversorgungsvorrichtung 1 für Kleinstspannungs-Gleichstromverbraucher, beispielsweise für Gleichstrommotoren von Luftfördereinrichtungen oder auch von Fenster- und Türbeschlag-Stellantrieben mit 12 V Betriebsspannung, außer einem sogenannten Solarpaneel 2 aus fotovoltaischen Elementen noch einen Akkumulator 3 als Puffereinrichtung, einen netzgespeisten Transformator 4 - gewissermaßen als Notstromversorger - und einen Laderegler 5 umfaßt.

Allein durch den Laderegler 5 wird dabei bestimmt, ob dem als Puffereinrichtung dienenden Akkumulator 3 der Ladestrom von dem als Haupt-Stromversorger dienenden Solarpaneel 2 aus oder aber von dem lediglich als Notstromversorger vorhandenen Transformator 4 aus zugeführt werden soll.

Als Laderegler 5 wird ein normalerweise lediglich zur Ansteuerung einer Leuchtdioden-Kette ausgelegter, also mit einer Mehrzahl von Ausgängen ausgestatteter, integrierter Schaltkreis, eingesetzt, der so geschaltet ist, daß seine einzelnen Ausgänge nacheinander, und zwar unter bestimmten Spannungssprüngen beispielsweise von 0,5 Volt, aktiviert werden.

Der als Laderegler 5 benutzte integrierte Schaltkreis hat beispielsweise zehn Ausgänge a - i - r - s - t - u - v - w - x - y - z. Hiervon wird der Ausgang z bei der niedrigsten und der Ausgang r bei der höchsten zugelassenen Ladespannung des Akkumulators 3 aktiviert. Der Ausgang a des Ladereglers 5 ist nicht belegt. Der Ausgang i hat wiederum eine Verbindung zum Ausgang s.

Der den Laderegler 5 bildende integrierte Schaltkreis hat andererseits acht Eingänge b - c - d - e - f - g - h i. Hiervon stehen der Eingang b mit der Minius-Klemme des Akkumulators 3 und der Eingang c mit der Plus-Klemme des Akkumulators 3 in Verbindung, um dessen jeweilige Ladespannung in den Laderegler 5 einzuspeisen. Die Eingang d und h liegen unter Zwischenschaltung eines Widerstandes 6 an der Minusklemme des Akkumulators 3, während die Eingänge f und g über einen zusätzlichen Widerstand 7 ebenfalls mit dieser Minusklemme verbunden sind. Der Eingang e liegt über einen regelbaren Widerstand 8 an der Minus-Klemme des Akkumulators 3 an. Der Regelwiderstand 8 steht dabei unter Zwischenschaltung eines Festwiderstandes 9 auch noch mit der Plus-Klemme des Akkumulators 3 in Verbindung.

Zur Vermeidung von Überbeanspruchungen ist parallel zum Regelwiderstand 8 und zum Festwiderstand 9 zwischen die Minus-Klemme und die Plus-Klemme des Akkumulators 3 noch eine Schutzdiode 10 gelegt.

Jeder der z.B. sieben Ausgänge s - t - u - v - w - x - y des den Laderegler 5 bildenden integrierten Schaltkreises ist über eine eigene Leuchtdiode 11 auf die Plus-Klemme des Akkumulators 3 geschaltet, so daß die betreffende Leuchtdiode anspricht bzw. aufleuchtet, wenn der zugehörige Ausgang aktiviert ist.

Die nicht mit einer Leuchtdiode 11 gekoppelten Ausgänge r und z sowie die beiden noch mit einer Leuchtdiode 11 gekoppelten Ausgänge t und u beschalten jeweils über einen eigenen Widerstand 12 die Basis eines bestimmten Transistors 13 wobei nebeneinander vier Transistoren 13 vorgesehen sind.

Alle vier Transistoren 13 sind über ihren Emitter an die Plus-Klemme des Akkumulators 3 gelegt, während ihr Kollektor jeweils auf eine von zwei Spulen 14a bzw. 14b oder 15a bzw. 15b eines bistabilen Relais 14 bzw. 15 geschaltet ist.

Andererseits liegt jede Spule 14a und 14b bzw. 15a und 15b der beiden bistabilen Relais 14 und 15 an der Minus-Klemme des Akkumulators 3.

Die beiden bistabilen Relais 14 und 15 betätigen jeweils einen An- und Abschalter 16 und 17. Dabei liegt der An- und Abschalter 16 in der Leitung, welche vom Transformator 4 zur Plus-Klemme des Akkumulators 3 geht. Der An- und Abschalter 17 ist hingegen in der Leitung angeordnet, die vom Solarpaneel 2 zur Plus-Klemme des Akkumulators 3 führt.

Die vier Transistoren 13 sind so vorgesehen, daß der Transistor 13 z˝ über den Ausgang z des Ladereglers 5 und den Widerstand 12 z˝ an seiner Basis Spannung erhält. Die Basis des Transistors 13 u wird über den Widerstand 12 u vom Ausgang u des Ladereglers 5 an Spannung gelegt, während die Basis des Transistors 12 r über den Widerstand 13 r vom Ausgang r des Ladereglers 5 her Spannung erhält. Schließlich kann die Basis des Transistors 13 z′/t sowohl vom Ausgang z des Ladereglers 5 über den Widerstand 12 z′als auch vom Ausgang t des Ladereglers 5 über den Widerstand 12 t mit Spannung versorgt werden.

Außerdem ist die innere Beschaltung des den Laderegler 5 bildenden integrierten Schaltkreises von solcher Art, daß die äußere Verbindung des Eingangs i mit dem Ausgang s einen bestimmten Einfluß auf die mit den z.B. sieben Ausgängen s - t - u - v - w - x - y verbundenen Leuchtdioden 11 nimmt. Es wird nämlich hierdurch erreicht, daß in der, beispielsweise auch aus sieben Leuchtdioden 11 bestehenden Leuchtdioden-Kette immer nur eine einzelne Leuchtdiode, und zwar diejenige, eingeschaltet ist, welche an dem zuletzt aktivierten Ausgang des Ladereglers 5 bzw. des integrierten Schaltkreises anliegt.

Gleichrichter-Dioden 18 sind sowohl in der Leitungsverbindung des Transformators 4 mit der Minus-Klemme des Akkumulators 3 als auch der Leitungsverbindung mit der Plus-Klemme des Akkumulators 3 vorgesehen. In die Leitungsverbindung, welche vom Solarpaneel 2 zur Plus-Klemme des Akkumulators 3 führt ist zur Rückflußverhinderung eine Sperrdiode 19 gelegt.

Zwischen die Minus-Klemme des Akkumulators 3 sowie die von der Plus-Klemme des Solarpaneels 2 zur Plus-Klemme des Akkumulators 3 führende Leitung ist hinter den An- und Abschalter 17 eine Leuchtdiode 20 und ein Widerstand 21 geschaltet. In entsprechender Weise ist zwischen die Minus-Klemme des Akkumulators 3 und die von der Plus-Klemme des Transformators 4 zur Plus-Klemme des Akkumulators 3 führende Leitung hinter dem An- und Abschalter 16 ebenfalls eine Hintereinanderschaltung einer Leuchtdiode 22 mit einem Widerstand 23 vorgesehen. Mit Hilfe der Leuchtdioden 20 und 22 wird daher kenntlich gemacht, welche der beiden Stromquellen - Solarpaneel 2 und/oder Transformator 4 - den Akkumulator 3 mit Ladestrom beaufschlagt.

Die vorstehend beschriebene, elektrische Energieversorgungsvorrichtung 1 unterliegt im wesentlichen fünf verschiedenen Schaltzuständen. Dabei ist ihr Ausgangs-Schaltzustand aus der Zeichnung ersichtlich. Hierbei sind sowohl der An- und Abschalter 16 als auch der An- und Abschalter 17 geöffnet, wenn die elektrische Energieversorungsvorrichtung 1 eingangsseitig ordnungsgemäß mit den Anschlußklemmen des Akkumulators 3, des Solarpaneels 2 und des Transformators 4 sowie ausgangsseitig mit den Anschlußklemmen des jeweiligen Verbrauchers verbunden wird. Dabei ist Voraussetzung, daß der Akkumulator 3 bereits aktiviert, also bis auf seine Nennspannung von beispielsweise 12 V aufgeladen ist.

Bei Einschaltung des Verbrauchers wird nunmehr Strom aus dem Akkumultor 3 so lange abgezogen, bis dieser seinen vorgegebenen, minimalen Ladezustand erreicht hat.

Der jeweilige Ladezustand des Akkumulators 3 beaufschlagt die Eingänge b und c des als Laderegler 5 dienenden integrierten Schaltkreises, und zwar mit der Folge, daß dessen Ausgang z aktiviert wird, sobald der minimale Ladezustand des Akkumulators 3 erreicht wird. Der aktivierte Ausgang z versorgt nun einerseits über den Widerstand 12 z′ die Basis des Transistors 13 z′/t und andererseits über den Widerstand 12 z˝ die Basis des Transistors 13 z˝ mit Strom. Die Transistoren 13 z′/t und 13 z˝ schalten damit durch, d. h. es fließt Strom einerseits durch die Wicklung 15a des bistabilen Relais 15 und andererseits durch die Wicklung 14a des bistabilen Relais 14. Damit werden die geöffenten An- und Abschalter 17 und 16 geschlossen und infolgedessen werden sowohl das Solarpaneel 2 als auch der Transformator 4 auf den Akkumulator 3 geschaltet. Gemeinsam bzw. gleichzeitig führen nun das Solarpaneel 2 und der Transformator 4 dem Akkumulator 3 Ladestrom zu.

Bei Erreichung eines vorgegebenen Teil-Ladezustandes des Akkumulators 3 wird nun der Ausgang u des Ladereglers 5 aktiviert, der dann über den Widerstand 12 u den Transistor 13 u durchschaltet und damit die Wicklung 14 b des bistabilen Relais 14 anspricht. Diese stellt den An- und Abschalter 16 aus dem geschlossenen in den geöffneten Zustand um und trennt infolgedessen die Stromzufuhr vom Transformator 4 zum Akkumulator 3 hin auf.

Nunmehr findet die weitere Aufladung des Akkumulators 3 nur noch vom Solarpaneel 2 aus statt, und zwar maximal bis der Akkumulator 3 seine Ladeschlußspannung von beispielsweise 13,8 V erreicht hat.

Nunmehr wird der Ausgang r des als Laderegler 5 dienenden intergrierten Schaltkreises aktiviert, so daß dieser über den Widerstand 12 r Spannung auf die Basis des Transistors 13 r gibt. Der Transistor 13 schaltet durch und führt über seinen Emitter und Kollektor Spannung auf die Wicklung 15 b des bistabilen Relais 15. Der An- und Abschalter 17 wird daher aus seiner Schließlage in die Öffnungslage gebracht und folglich auch das Solarpaneel 2 vom Akkumulator 3 getrennt. In diesem Augenblick ist dann wieder der aus der Zeichnung ersichtliche Schaltzustand erreicht.

Vermindert sich durch Einschaltung der an den Klemmen 28 und 29 bzw. 28 und 30 liegenden Verbraucher der Ladezustand des Akkumulators 3 nur um einen Bruchteil, beispielsweise etwa um 10%, seiner maximalen Kapazität, dann wird hierdurch der Ausgang t des Ladereglers 5, also ein Zwischen-Ausgang desselben aktiviert. Dieser beaufschlagt nun über den Widerstand 12 t die Basis des Transistors 13 z′/t, so daß dessen Emitter auf den Kollektor durchschaltet und somit die Wicklung 15a des bistabilen Relais 15 unter Spannung setzt. Der An- und Abschalter 17 wird nunmehr wieder aus seiner Öffnungslage in die Schließlage umgestellt. Hierdurch wird das Solarpaneel 2 auf den Akkumulator 3 durchgeschaltet und versorgt diesen mit Ladestrom. Der An- und Abschalter 17 bleibt immer geschlossen, solange nicht der Akkumulator 3 seinen maximalen Ladezustand erreicht, also solange nicht wieder der Ausgang r des Ladereglers 5 aktiviert wird.

Andererseits verbleibt der An- und Abschalter 16 immer in seiner Öffnungslage, solange nicht wieder der minimale Ladezustand des Akkumulators 3 ansteht, bei welchem der Ausgang z des Ladereglers 5 aktiviert ist.

Wenn der Akkumulator 3 seine Ladeschlußspannung von beispielsweise 13,8 V erreicht hat, beaufschlagt diese die Eingänge b und c des als Laderegler 5 dienenden integrierten Schaltkreises. Das hat zur Folge, daß sein Ausgang r aktiviert wird und über den Widerstand 12 r die Basis des Transistors 13 r mit Spannung versorgt. Hierdurch wird der Transistor 13 r durchlässig, d.h. es fließt dort der Strom vom Emitter zum Kollektor und von diesem weiter zur Spule 15 b des bistabilen Relais 15. Damit gelangt dann der An- und Abschalter 17 in seine Öffnungsstellung, wie dies die Zeichnung zeigt.

Der An- und Abschalter 16 wird schon geöffnet, bevor der Akkumulator 3 seine Ladeschlußspannung von beispielsweise 13,8 Volt erreicht hat. Nach der Darstellung der Zeichnung ist dies der Fall, wenn am Laderegler 5 bzw. dem diesen bildenden integrierten Schaltkreis der Ausgang u aktiviert wird. Die hier anstehende Spannung geht dann über den Widerstand 12 u auf die Basis des Transistors 13 u, so daß dieser durchlässig wird. Es fließt dann Strom von dessen Emitter zum Kollektor und von dort aus zur Wicklung 14 b des bistabilen Relais 14, womit der An- und Abschalter 16 geöffnet und folglich der Stromfluß vom Transformator 4 zum Akkumulator 3 unterbrochen wird.

Sinkt die Ladespannung des Akkumulators 3 unter einen vorgebbaren Wert, beispielsweise unter 8 Volt, ab, dann wird im Laderegler 5 bzw. dem diesen bildenden integrierten Schaltkreis der Ausgang z aktiviert. Über den Widerstand 12 z′ wird dann die Basis des Transistors 13 z′/t an Spannung gelegt, so daß dieser Transistor für Stromfluß von seinem Emitter zu seinem Kollektor durchlässig wird und damit die Spule 15a des bistabilen Relais 15 anspricht, um den An- und Abschalter 17 zu schließen. Dieser verbindet so das Solarpaneel 2 mit dem Akkumulator 3. Vom Ausgang z des Ladereglers 5 wird aber über den Widerstand 12 z˝ auch Spannung an die Basis des Transistors 13 z˝ gelegt. Auch dieser wird damit für einen Stromfluß von seinem Emitter zu seinem Kollektor durchlässig und legt damit die Spule 14a des bistabilen Relais 14 an Spannung. Es schließt sich daher der An- und Abschalter 16 und verbindet infolgedessen auch den Transformator 4 mit dem Akkumulator 3, um den vorrangig durch das Solarpaneel bewirkten Ladevorgang für den Akkumulator 3 zeitweilig, nämlich bis zum Erreichen des vorgegebenen Durchschnitts-Ladezustandes, zu unterstützen. Dieser ist erreicht, wenn der Ausgang u des Ladereglers 5 aktiviert wird, den Transistor 13 u durchschaltet und damit wieder die Wicklung 14b des bistabilen Relais 14 wirksam macht. Der An- und Abschalter 16 wird folglich geöffnet, um den Transformator 4 vom Akkumulator 3 zu trennen. Nunmehr arbeitet nur noch das Solarpaneel 2 auf den Akkumulator 3, und zwar so lange, bis dieser seine Ladeschlußspannung von beispielsweise 13,8 Volt erreicht hat. Die Aktivierung des Ausgangs r am Laderegler 5 macht dann den Transistor 13 r durchlässig, welcher über die Spule 15b des bistabilen Relais 15 den An- und Abschalter 17 wieder öffnet. Nunmehr ist dann auch das Solarpaneel 2 vom Akkumulator 3 getrennt.

Aus der Zeichnung geht noch hervor, daß zwischen den Minus-Ausgang und dem Plus-Ausgang des Akkumulators 3 mehrere in Reihe bzw. hintereinandergeschaltete integrierte Schaltkreise 24a, 24b und 24c gelegt werden können, von denen jeder eine Ausbildung als Spannungsregler aufweist. Mit Hilfe dieser integrierten Schaltkreise 24a, 24b, 24c ist es über ein Potentiometer 26 und einen Festwiderstand 27 möglich, die Ausgangsspannung des Akkumulators 3 beispielsweise zwischen einem Höchstwert von 10 Volt und einem Minimalwert von 6 Volt zu regeln.

Innerhalb der elektrischen Energieversorgungsvorrichtung 1 ist zwischen die beiden mit dem Akkumulator 3 zu verbindenden Anschlußklemmen ein Piezo-Schallgeber 25 gelegt. Dieser wird aktiviert, wenn der Akkumulator 3 mit falscher Polung an die Energieversorgungsvorrichtung 1 angeschlossen wird. Er schützt durch Abgabe eines akustischen Signals die Energieversorgungsvorrichtung 1 gegen Beschädigung. Auch die Dioden 18 und 31 haben den Zweck, die Zerstörung der Schaltung bei Falschpolung des Akkumulators 3 zu unterbinden.

Es wird noch darauf hingewiesen, daß die Ausgänge v - w - x - y des als Laderegler 5 verwendeten integrierten Schaltkreises lediglich benutzt werden, um die mit ihnen verbundenen Leuchtdioden 11 der Leuchtdioden-Kette zu aktivieren und dadurch tendenziell den Ladezustand des Akkumulators 3 anzuzeigen. Außer den nicht mit einer Leuchtdiode 11 verbundenen Ausgängen r und z dienen noch die Ausgänge t und u des integrierten Schaltkreises innerhalb der elektrischen Energieversorgungsvorrichtung 1 der Funktion als Laderegler 5.

Die Minus-Anschlußklemme für die Verbraucher hat das Bezugszeichen 28. Die Plus-Anschlußklemme 29 hierfür wird mit einer konstanten Spannung von 12 V versorgt, während die Spannung an der Plus-Anschlußklemme 30 zwischen 6V und 10 V regelbar ist.

## Patentansprüche

1. Elektrische Energieversorgungsvorrichtung für Kleinstspannungs-Gleichstomverbraucher, z.B. Gleichstrommotoren von Luftfördereinrichtungen oder auch Fenster- und Türbeschlag-Stellantrieben, bestehend aus fotovoltaischen Elementen (2) und einem hiervon beaufschlagten Akkumulator (3), der dem Verbraucher als Puffereinrichtung vorgeschaltet ist,
dadurch gekennzeichnet,
daß dem Akkumulator (3) neben den fotovoltaischen Elementen (2) ein netzgespeister Transformator (4) zugeordnet ist,
daß der Akkumulator (3) mit den fotovoltaischen Elementen (2) und/oder dem sekundären Teil des Transformators (4) über einen Laderegler (5) verbindbar ist,
und daß dabei dieser Laderegler (5) in Abhängigkeit vom Ladezustand des Akkumulators (3) zwischen drei verschiedenen Schaltzuständen umstellbar ist,
von denen der eine die fotovoltaischen Elemente (2) und den Transformator (4) parallel zueinander auf den Akkumulator (3) schaltet, während der zweite den Transformator (4) vom Akkumulator (3) trennt und der dritte auch eine Trennung der fotovoltaischen Elemente (2) vom Akkumulator (3) herbeiführt.

2. Elektrische Energieversorgungsvorrichtung nach Anspruch 1,
gekennzeichnet durch,
Schaltglieder (z, u) im Laderegler (5) über die der Transformator (4) einerseits ausschließlich bei Unterschreitung eines vorgegebenen Minimal-Ladezustandes des Akkumulators (3) mit diesem verbindbar (z), andererseits aber lediglich bis zum Erreichen eines vorgebbaren Durchschnitts-Ladezustandes mit diesem in Verbindung haltbar (u) ist.

3. Elektrische Energieversorgungsvorrichtung nach einem der Ansprüche 1 und 2,
dadurch gekennzeichnet,
daß als Laderegler (5) ein zur Ansteuerung einer Leuchtdioden-Kette (11) ausgelegter - also eine Mehrzahl von Ausgängen (r - s - t - u - v - w - y - z) aufweisender - integrierter Schaltkreis eingesetzt ist, bei dem die einzelnen Ausgänge (r - s - t - u - v - w - x - y - z) einen bestimmten Spannungsabstand, z.B. von 0,5 Volt, voneinander haben,
daß der integrierte Schaltkreis über zwei mit dem Akkumulator (3) verbundene Eingänge (b, c) in Abhängigkeit von unterschiedlichen Ladezuständen des Akkumulators (3) auf seine einzelnen Ausgänge (r - s - t - u - v - w - x - y - z) umschaltbar ist,
und daß dabei ein erster Ausgang (z) des integrierten Schaltkreises bei minimalem Ladezustand und ein letzter Ausgang (r) desselben bei maximalem Ladezustand des Akkumulators (3) aktiviert ist, wobei der erste Ausgang (z) sowohl den Transformator (4) als auch die fotovoltaischen Elemente (2) mit dem Akkumulator (3) verbindet (13 z˝, 14a, 16, 13 z′/t, 15a, 17), während ein Zwischen-Ausgang (u) den Transformator (4) vom Akkumulator (3) bei Erreichen eines vorgebbaren Teil-Ladezustandes trennt (13u, 14b, 16), und der letzte Ausgang (r) die fotovoltaischen Elemente 2 vom Akkumulator (3) trennt (13r, 15b, 17).

4. Elektrische Energieversorgungsvorrichtung nach einem der Ansprüche 1 bis 3,
dadurch gekennzeichnet,
daß ein weiterer Zwischen-Ausgang (t) ausschließlich die fotovoltaischen Elemente (2) an den Akkumulator (3) legt (13 z′/t, 15a, 17), nachdem dieser nur um einen Bruchteil seiner maximalen Kapazität entladen ist.

5. Elektrische Energieversorgungsvorrichtung nach einem der Ansprüche 1 bis 4,
dadurch gekennzeichnet,
daß eine größere Anzahl von Ausgängen (s - t - u - v - w - x - y) des integrierten Schaltkreises auch noch mit je einer als Anzeigeelement dienenden Leuchtdiode (11) in Verbindung steht.

6. Elektrische Energieversorungsvorrichtung nach einem der Ansprüche 1 bis 5,
dadurch gekennzeichnet,
daß die An- und Abschalter für den Transformator (4) und die fotovoltaischen Elemente (2) jeweils von einem bistabilen Relais (16 und 17) gebildet sind,
und daß dabei jede Wicklung (14a, 14b, 15a, 15b) desselben eingangsseitig unter Zwischenschaltung eines Transistors (13) an einen bestimmten Ausgang (z, u, t) des integrierten Schaltkreises gelegt ist.

7. Elektrische Energieversorgungsvorrichtung nach Anspruch 6,
dadurch gekennzeichnet,
daß Jeder Transistor (13) mit seiner Basis an einem Ausgang (z, u, t) des integrierten Schaltkreises liegt,
und daß er über seinen Kollektor mit der zugeordneten Wicklung (14a, 14b bzw. 15a, 15b) des bistabilen Relais (14, 15) in Verbindung steht.

8. Elektrische Energieversorgungsvorrichtung nach Anspruch 6,
dadurch gekennzeichnet,
da sowohl dem An- und Abschalter (16) für den Transformator (4) als auch dem An- und Abschalter (17) für die fotovoltaischen Elemente (2) eine Leuchtdiode (20, 22) als Anzeigeelement zugeordnet ist.

9. Elektrische Energieversorgungsvorrichtung nach einem der Ansprüche 1 bis 8,
dadurch gekennzeichnet,
daß zwischen dem Plus-Ausgang und den Minus-Ausgang des Akkumulators (3) mehrere in Reihe bzw. hintereinander geschaltete integrierte Schaltkreise (24a, 24b, 24c) gelegt sind, die eine Ausbildung als Spannungsregler aufweisen.

## Claims

1. Electrical power-supply device for minimum-voltage d.c. consumers, e.g. d.c. motors of air discharge equipment or actuators for window and door fittings, consisting of photo-voltaic elements (2) and an accumulator (3) pressurized by it, which is upstream from the consumer as a buffer device,
characterized in that
a mains-fed transformer (4) is assigned to the accumulator (3) beside the photovoltaic elements (2),
that the accumulator (3) is connectable by means of a charging regulator (5) with the photovoltaic elements (2) and/or the secondary part of the transformer (4),
and that this charging regulator (5) is adjustable, depending on the charging status of the accumulator (3), between three different output states,
one of which switches the photovoltaic elements (2) and the transformer (4) parallel to each other to the accumulator (3), while the second isolates the transformer (4) from the accumulator (3) and the third also induces an insulation of the photovoltaic elements (2) from the accumulator (3).

2. Electrical power-supply device according to claim 1,
characterized by
contact elements (z, u) in the charging regulator (5) via which the transformer (4) is on the one hand, solely on falling short of a preset minimum charging status of the accumulator (3), connectable (z) with it, but on the other hand is maintainable in connection with it (u) only until attainment of a presettable average loading status.

3. Electrical power-supply device according to one of claims 1 and 2,
characterized in that
an integrated circuit designed for activation of a light-emitting diode chain (11) - i.e. having a number of outputs (r - s - t - u - v - w - y - z), in which the individual outputs (r - s - t - u - v - w - x - y - z) have a specific voltage clearance, e.g. of 0.5 volts from one another - is used as the charging regulator (5),
that the integrated circuit is adjustable to its individual outputs (r - s - t - u - v - w - x - y - z) by means of two inputs (b, c) connected with the accumulator (3) in dependence on different charging statuses of the accumulator (3),
and that a first output (z) of the integrated circuit is thereby activated at minimum charging status and a last output (r) of the same at maximum charging status of the accumulator (3),
whereby the first output (z) connects (13 z˝, 14a, 16, 13 z′/t, 15a, 17) both the transformer (4) and the photovoltaic elements (2) with the accumulator (3), while an intermediate output (u) isolates the transformer (4) from the accumulator (3) on reaching a presettable partial charging status (13u, 14b, 16), and the last output (r) isolates (13r, 15b, 17) the photovoltaic elements (2) from the accumulator (3).

4. Electrical power-supply device according to one of claims 1 through 3,
characterized in that
a further intermediate output (t) solely applies (13 z′/t, 15a, 17) the photovoltaic elements (2) to the accumulator (3) after the latter is discharged by only a fraction of its maximum capacity.

5. Electrical power-supply device according to one of claims 1 through 4,
characterized in that
a larger number of outputs (s - t - u - v - w - x - y) of the integrated circuit are also each in contact with a light-emitting diode (11) serving as a indicating element.

6. Electrical power-supply device according to one of claims 1 through 5,
characterized in that
the connector and disconnector for the transformer (4) and the photovoltaic elements (2) are each formed by a bistable relay (16 and 17),
and that each winding (14a, 14b, 15a, 15b) of the latter is applied thereby at the input end under interposition of a transistor (13) to a specific output (z, u, t) of the integrated circuit.

7. Electrical power-supply device according to claim 6,
characterized in that
each transistor (13) is applied with its base to an output (z, u t) of the integrated circuit,
and that it is in connection via its collector with the assigned winding (14a, 14b or 15a, 15b respectively) of the bistable relay (14, 15).

8. Electrical power-supply device according to claim 6,
characterized in that
a light-emitting diode (20, 22) is assigned as an indicating element to both the connector and disconnector (16) for the transformer (4) and to the connector and disconnector (17) for the photovoltaic elements (2).

9. Electrical power-supply device according to one of claims 1 through 8,
characterized in that
several integrated circuits connected in series (24a, 24b, 24c), which have are designed as voltage regulators, are applied between the positive output and the negative output of the accumulator (3).

## Revendications

1. Dispositif électrique d'alimentation en énergie pour des appareils consommateurs à courant continu de tension inférieure ou égale à 42 V, par ex. moteur à courant continu de convoyeurs pneumatiques ou de vérins de ferrures de portes et fenêtres, composé d'éléments photovoltaïques (2) et d'un accumulateur (3) alimenté par eux qui est intercalé au consommateur sous la forme d'un dispositif tampon,
caractérisé par le fait
qu'en plus des éléments photovoltaïques (2) un transformateur (4), alimenté par le secteur, est adjoint à l'accumulateur (3),
que l'accumulateur (3) est raccordable aux éléments photovoltaïques (2) et/ou à la partie secondaire du transformateur (4) par un régulateur de charge (5), et
qu'en cela le régulateur de charge (5) peut être commuté entre trois états de commande différents en fonction de l'état de charge de l'accumulateur (3), dont
l'un commute les éléments photovoltaïques (2) et le transformateur (4) parallèlement entre eux sur l'accumulateur (3),- tandis que le deuxième sépare le transformateur (4) de l'accumulateur (3) et que le troisième entraîne une séparation des éléments photovoltaïques (2) de l'accumulateur (3).

2. Dispositif électrique d'alimentation en énergie selon la revendication 1,
caractérisé par le fait
que les leviers d'interrupteurs (z u) dans le régulateur de charge (5) par lesquels le transformateur (4) est raccordable (z) à l'accumulateur (3) d'une part exclusivement si l'état de charge minimum spécifié de l'accumulateur (3) n'est pas atteint et d'autre part est résistant (u) en liaision avec celui-ci seulement jusqu'à l'atteinte d'un état de charge moyenne spécifiable.

3. Dispositif électrique d'alimentation en énergie selon l'une des revendications 1 et 2
caractérisé par le fait
qu'un circuit de commande intégré -présentant donc une quantité de sorties (r - s- t- u - v - w - y -z)-, conçu pour l'excitation d'une chaîne de diodes (11), est utilisé comme régulateur de charge (5) sur lequel toutes les sorties (r - s - t- u - v- w - x- y - z) ont un certain intervalle de tension entre elles, par ex. de 0,5 volt,
que le circuit de commande intégré est commutable sur chacune de ses sorties (r - s- t- u- v- w- x- y - z) par deux entrées (b, c) reliées à l'accumulateur (3) en fonction des différents états de charge de l'accumulateur (3),
et que, ce faisant, une première sortie (z) du circuit de commande intégré est activée à l'état de charge minimum et qu'une dernière sortie (r) de ce même circuit l'est à l'état maximum de charge de l'accumulateur (3),
sachant que la première sortie (z) relie (13 z˝, 14a, 16 ,13 z′/t, 15a, 17) à l'accumulateur (3) aussi bien le transformateur (4) que les éléments photovoltaïques (2), tandis qu'une sortie intermédiaire (u) sépare le transformateur (4) de l'accumulateur (3) lors de l'atteinte d'un état partiel de charge spécifiable (13u, 14b, 16) et que la dernière sortie (r) sépare (13r, 15b, 17) les éléments photovoltaïques 2 de l'accumulateur (3).

4. Dispositif électrique d'alimentation en énergie selon l'une des revendications 1 à 3,
caractérisé par le fait
qu'une autre sortie intermédiaire (t) met en place (13 z′/t, 15a, 17) exclusivement les éléments photovoltaïques (2) sur l'accumulateur (3) après que celui-ci a perdu seulement une fraction de sa capacité maximum.

5. Dispositif électrique d'alimentation en énergie selon l'une des revendications 1 à 4,
caractérisé par le fait
qu'un plus grand nombre de sorties (s - t -u -v- w - x - y) du circuit de commande intégré est encore en liaison avec respectivement une diode lumineuse (11) servant d' élément indicateur.

6. Dispositif électrique d'alimentation en énergie selon l'une des revendications 1 à 5,
caractérisé par le fait
que les connecteurs et les déconnecteurs du transformateur (4) et des éléments photovoltaïques (2) sont respectivement constitués par un relais bistable (16 et 17),
et que chaque bobine (14a, 14b 15a, 15b) du même circuit est installée du côté de l'entrée par l'intercalage d'un transistor (13) sur une certaine sortie (z, u, t) du circuit de commande intégré.

7. Dispositif électrique d'alimentation en énergie selon la revendication 6,
caractérisé par le fait
que la base de chaque transistor (13) est posée sur une sortie (z, u, t) du circuit de commande intégré et
qu'il est relié avec la bobine affectée (14a, 14b, voire 15a, 15b) du relais bistable (14, 15) par son collecteur.

8. Dispositif électrique d'alimentation en énergie selon la revendication 6,
caractérisé par le fait
qu'une diode lumineuse (20 22) est attribuée comme élément indicateur aussi bien au connecteur et déconnecteur (16) du transformateur (4) qu'au connecteur et déconnecteur (17) des éléments photovoltaïques (2).

9. Dispositif électrique d'alimentation en énergie selon l'une des revendications 1 à 8,
caractérisé par le fait
que plusieurs circuits de commandes intégré (24a, 24b, 24c) commutés en série, voire les uns après les autres et qui présentent une configuration de régulateur de tension, sont installés entre la sortie plus et la sortie moins de l'accumulateur (3).
